Europäisches Patentamt

European Patent Office

Office européen des brevets

(11) Publication number: **0 182 600 B1**

(19)

# EUROPEAN PATENT SPECIFICATION

(12)

(45) Date of publication of patent specification: **12.08.92**

(51) Int. Cl.[5]: **C08F 20/04**, C11D 3/37, C09K 7/02

(21) Application number: **85308261.8**

(22) Date of filing: **13.11.85**

(54) **Use of water soluble polymers in aqueous drilling or packer fluids and as detergent builders.**

(30) Priority: **16.11.84 GB 8428985**
**23.07.85 GB 8518537**

(43) Date of publication of application:
**28.05.86 Bulletin 86/22**

(45) Publication of the grant of the patent:
**12.08.92 Bulletin 92/33**

(84) Designated Contracting States:
**AT BE CH DE FR GB IT LI NL SE**

(56) References cited:
EP-A- 0 046 573      EP-A- 0 129 329
EP-A- 0 170 527      CH-A- 335 787
FR-A- 2 185 721      GB-A- 2 029 429
US-A- 3 759 860

ABSTRACTS BULLETIN OF THE INSTITUTE
OF PAPER CHEMISTRY, vol. 54, no. 7, Janu-
ary 1984, page 749, no. 6914, Appleton, Wis-
consin, US; J.M. LAMARCHE et al.: "Influence
of molecular weight of sodium polyacrylate
in calcium carbonate aqueous dispersions"

(73) Proprietor: **ALLIED COLLOIDS LIMITED**
**P.O. Box 38 Low Moor**
**Bradford West Yorkshire, BD12 0JZ(GB)**

(72) Inventor: **Farrar, David**
**13 Greenfield Lane Idle**
**Bradford West Yorkshire(GB)**
Inventor: **Hawe, Malcolm**
**3 Broombank Birkby**
**Huddersfield West Yorkshire(GB)**
Inventor: **Dymond, Brian**
**9 Carr House Road Wyke**
**Bradford West Yorkshire(GB)**

(74) Representative: **Lawrence, Peter Robin**
**Broughton et al**
**GILL JENNINGS & EVERY 53-64 Chancery**
**Lane**
**London WC2A 1HN(GB)**

## Description

We describe in EP-A-129329 (unpublished at the priority date of this application) polymers of low polydispersity and their use as dispersing agents, and we describe prior art relevant to them in EP-B-0129329. The present invention relates to uses of these polymers and also discloses some additional polymers that can be used for these uses. EP-A- 170 527 (unpublished at the priority date of this application) discloses aqueous drilling or packer fluids comprising sulphonated polymers and co-polymers.

In GB 758,986, aqueous pigment dispersions are described using a polymeric dispersant. It is stated that the dispersant must have homogeneity in that it must not impart a viscosity of more than 1,000cps at 25°C to solutions of its anhydride form at concentrations of 35% in an organic solvent such as dioxane or methyl ethyl ketone. It is further stated that this requirement eliminates mixtures of copolymers which contain some very large molecules and sufficient very low molecular weight copolymer to bring the apparent molecular weight to the useful range which is defined as being preferably 750 to 5,000. It is further stated that the term homogeneous is used to define copolymers with a narrow distribution of copolymer sizes. No values are quoted for polydispersity but the reference to the avoidance of mixtures of very large molecules with very low molecular weight copolymers indicates that the disclosure is merely saying what has now been recognised for very many years, namely that suitable low molecular weight dispersants should be free of components having such high molecular weight that they will impart significant viscosity. This is of course well known and the presence of such very high molecular weight components is likely to cause flocculation rather than dispersion. The polymers in GB 758,986 which are described as being homogeneous therefore probably have a polydispersity which is no less than the polydispersity of conventional dispersants, and probably very much more.

Lamarche et al in Ind.Eng.Chem.Prod.Res.Dev. 1983, 22, 123 to 126 examine the influence of molecular weight of sodium polyacrylate in calcium carbonate aqueous dispersions and, in particular, they show data on polymers having molecular weights in the range 700 to 100,000 and they classify these polymers as polymers having "low" or "high" molecular weight distribution or polydispersity index. They state in their conclusion that "very different results can be obtained by changing the molecular weight distribution of the polymer in the size range 2,000 to 20,000". However the only true comparisons between polymers of the same molecular weight and different polydispersity indices are comparisons between polymers F and H which each have a molecular weight of 4,000. The data shows that these two polymers, one being of "low" polydispersity index and the other being "high", give identical absorption values and, presumably therefore, identical dispersing properties. No quantitative values are given for the "low" or "high" polydispersity indices but since polymers of molecular weight 4,000 having "low" and "high" polydispersity indices show the same properties it seems probable that the "low" value is still relatively high, probably at least as high as the conventional polydispersity values for known polyacrylic acid dispersing agents, as discussed above. Where the viscosity measurements are quoted in this article, they are always quoted in respect of calcium carbonate slurry having a solids content of 40%.

One aspect of the invention provides the use as a dispersant in a drilling or packer fluid of a water soluble polymer formed from one or more unsaturated monomers comprising carboxylic acid containing monomer, or a water soluble salt thereof, having Mw from 1,500 to 50,000 measured on the full sodium salt, characterised in that PD is below 1.5 and the monomers do not include an ethylenically unsaturated compound having a sulphonate group substituted on to an aliphatic carbon atom.

Aqueous drilling and packer fluids, for instance for use in wells for hydrocarbon extraction, consist of an aqueous phase in which inorganic particulate material is or may be dispersed and that contains dissolved organic additives. The inorganic particulate material, during use, includes drill cuttings and generally it includes a colloidal clay such as bentonite. The organic additives will be selected having regard to the properties required of the drilling or packer fluid and generally fall into three classes. One class are known as thinners, gel preventors or dispersants and these serve to reduce viscosity or prevent undesirable increases in viscosity, for instance by keeping the particulate material in fluid dispersion. Another class are known as fluid loss additives or filtration control agents and have higher molecular weight than the dispersants. A third class are known as viscosifiers, and have even higher molecular weight.

Various low molecular weight polymers containing acid groups have been proposed for use as dispersants in aqueous drilling or packer fluids. For instance in US Patent Specification 3,730,900 styrene sulphonic acid maleic anhydride copolymers of molecular weight from 1,000 to 5,000 are described and have been used extensively under the trade name "Miltemp". In US Patent Specification 3,764,530 and in British 2,120,708 it is proposed to use various low molecular weight acrylic acid polymers. In British 2,090,888 it is proposed to use a copolymer of acrylic acid and hydroxy propyl acrylate. These materials would all have had conventional high or very high polydispersity values.

In the invention the defined polymer of low polydispersity is effective as a dispersant or thinner. Mw is generally below 20,000 and preferably below 10,000. Mw 1500 to 5000 is generally preferred with best results around 1500 to 4000. The acid groups may all be carboxylic acid groups (e.g. polyacrylic acid).

PD preferably is in the range 1.05 to 1.4, most preferably 1.1 to 1.3 or 1.35. The amount of dispersant is generally 0.5 to 30 g/l, most preferably 0.5 to 3 g/l.

The fluid may contain other thinners, for instance lignosulphonate thinners, but preferably the polyacrylic acid is the only dispersant or thinner. The fluid may contain other fluid loss additives. It generally contains bentonite or other colloidal clay, generally in amounts of from 25 to 150 g/l. The fluid may contain a weighting agent such as barites, typically in amounts of from 100 to 1,000 g/l.

The polymers are of particular value when the fluid contains dissolved calcium, generally in amounts of at least 0.25 grams dissolved calcium per litre of fluid, typically 0.5 to 10 g/l. For instance the fluid may contain 2 to 30 g/l calcium hydroxide or sulphate or other calcium compound that can contribute dissolved calcium.

Another aspect of the invention relates to the use as detergent builder and/or anti-redeposition aid in a detergent composition of a water soluble polymer formed from one or more unsaturated monomers including monomer containing acid groups selected from carboxylic, sulphuric and sulphonic acid groups, or a water soluble salt thereof and having Mw from 1,500 to 100,000, characterised in that the polymer has PD below 1.5.

The monomers from which the polymers are derived are often acrylic monomers. Suitable monomers are acrylic acid, methacrylic acid, itaconic acid, vinyl sulphonic acid, vinyl sulphuric acid, allyl sulphonic acid, maleic acid, fumaric acid, and 2-acrylamido-2-methyl propane sulphonic acid (AMPS) and 2-acrylamido-2-phenyl propane sulphonic acid.

Any comonomers that can be copolymerised, in the amounts present, with the acidic monomer or monomers to form a water soluble polymer can be used and include monomers such as acrylamide, acrylonitrile and acrylic esters. Generally at least 50% by weight and often at least 80% by weight of the monomers from which the polymer is formed are acidic monomers. The polymer is generally a linear polymer.

Particularly preferred polymers are homopolymers of acrylic acid and copolymers of acrylic acid with AMPS.

Other particularly preferred polymers are polymers formed from allyl sulphonic acid (or a water soluble salt thereof, optionally copolymerised with copolymerisable monomer. The amount of allyl sulphonic acid (or salt) is usually at least 10% by weight of the monomers.

Detergent builders serve to remove hardness ions from water containing the detergent composition. Conventional chelating agents are suspected of being toxic, are difficult to process in the compositions and are expensive. Phosphates and polyphosphates are often used but are suspected of being dangerous and toxic and their use is temperature dependent. Some water soluble polyacrylates have been proposed as detergent builders. Conventional polyacrylic acid detergent builders will typically have PD of the order of 2 or higher.

Another problem with detergent compositions is that soil that has been removed from a fabric may be redeposited and it is known to include anti-redeposition aids in the detergent compositions to prevent this. Various synthetic polymers, including homopolymers and copolymers of acrylic acid, have been proposed for use as anti-redeposition aids. Again such polymers will conventionally have PD around 2 or higher.

In U.S. 3,898,037 it is said that polymers of acrylamido sulphonic acids can be used for dispersing solids such as silts, clays and iron oxide deposits. It is said that the polymers do not react with calcium ions (i.e., opposite to the requirement for a detergent builder).

In GB 935,733 polymers of vinyl sulphonic acid are proposed as detergent builders. Again the PD of such polymers will typically be high.

In the invention a detergent composition comprises a low PD water soluble polymer as defined above. We have surprisingly found that the low PD polymers of the invention have improved detergent building and/or anti-redeposition aid properties in detergent compositions compared to the corresponding polymers of higher PD.

Mw is at least 1,500. When the polymer is to serve as a detergent builder Mw is generally up to 50,000, preferably up to 20,000 and most preferably up to about 5,000 or about 6,000. Particularly preferred products are those having PD below 1.4 and Mw 1,000 to 4,000.

When the polymer is to serve as an anti-redeposition aid Mw can be up to 100,000 or preferably up to 20,000. Preferred products are those having PD below 1.4 and Mw 2,000 to 20,000.

Generally PD = 1.05 to 1.45 and in particular from 1.1 to 1.4. The best results are obtained with PD below 1.4 and preferably below 1.35. Although it is desirable for the value to be as close to 1 as possible it is generally acceptable for it to be above 1.25.

The polymer is preferably a carboxylic polymer (e.g. polyacrylic acid) or a copolymer containing carboxylic and sulphonic groups (e.g. an acrylic acid - AMPS copolymer).

The amount of the polymer in the composition may be typical for detergent builders or anti-redeposition aids, e.g. 2 to 75% generally 2 to 50% but with 5 to 75% being suitable for detergent builders. The compositions may contain conventional detergent components.

Hard surface detergents usually have as their main active ingredients one or more inorganic alkaline compounds. Examples of such compounds are alkali metal hydroxides, silicates, phosphates, polyphosphates, hypochlorite. Alternatively or additionally hard surface detergent compositions may comprise one or more organic surfactants.

Detergent compositions for use in cleaning fabrics have as their main active ingredients organic surfactants.

Organic surfactants that may be used in the detergent compositions of the invention may include anionic, cationic, non-ionic and amphoteric surfactants.

Anionic surfactants may be carbonates (soaps), sulphonates, sulphates or phosphates. Particularly suitable surfactants are alkali metal salts of natural fatty acids, or alkylbenzene sulphonates in which the alkyl radical has from about 8 to about 22 carbon atoms, alkali metal alkyl sulphates in which the alkyl group has from 8 to 18 carbon atoms.

Non-ionic synthetic detergents may be aliphatic or alkyl aromatic for example derived from alkalene oxides and glycols, such as ethylene oxide, propylene glycol and/or propylene oxide and their condensation products. Other suitable non-ionic detergents are fatty acid esters of sugars or tertiary phosphate oxides.

Amphoteric surfactants generally contain a quaternary ammonium ion and a sulphonic acid or carboxylic acid group and are particularly useful in cool water detersive systems.

The detergent compositions may comprise in addition conventional additives which may be organic or inorganic such as anti-redeposition agents, corrosion inhibitors, foaming or anti-foaming agents, bleaching agents, fluorescent whitening agents, antimicrobial agents, proteolitic enzymes and fillers. They may also comprise cobuilders such as conventional detergent builders such as sodium tripolyphosphate or other phosphates. Anti-redeposition agents may be for instance sodium carboxymethyl cellulose or other starch derivatives or hydrophilic synthetic polymers.

The detergent compositions are generally in the form of dry granules but may be liquid compositions, for example solutions or slurries. Dry granular compositions are usually formed by spray drying an aqueous slurry of the components in water.

By using polymers of low polydispersity, which are very effective calcium sequestrants, the use of undesirable phosphate builders can be reduced or eliminated altogether.

The polymers for use in the invention can be made by the techniques described in EP 0129329. For a detailed description of these methods, and for various compositions containing the polymers, reference should be made in particular to examples 1 to 9 of EP 0129329.

Similarly other polymers can be prepared by the general technique described in Example 1 of EP 0129329 but using different monomers. When the monomer consisted solely of methacrylic acid 25% neutralisation with sodium hydroxide fractionated the product into a lower molecular weight isopropanol phase that was useful as a dispersant for china clay and a higher molecular weight aqueous phase.

When the monomer consist of equal parts by weight itaconic acid and methacrylic acid 25% neutralisation with sodium hydroxide results in fractionation into a higher molecular weight aqueous phase and a lower molecular weight isopropanol phase.

When the monomer consisted of sodium vinyl sulphonate the initial polymer is in the sodium form and this can be part neutralised by acidic ion exchange resin and then fractionated using isopropanol.

The following are some examples of the invention.

EXAMPLE 1

Various polymers suitable for use as detergent builders were tested in the Hampshire test which tests the ability of chelating agents to take up calcium ions, this having been found to correlate well with detergent builder properties. The test determines the concentration of the free calcium ions in a solution containing a known amount of chelating agent and a known amount of calcium using a calcium electrode.

Solutions of the AMPS copolymers having the compositions shown in the accompanying table were made up at a concentration of 0.25% by weight. A calcium electrode is placed in the solution and the concentration of free calcium in the solution is monitored by comparing the readings on the electrode meter against a calibration curve. An aqueous solution of the soluble calcium salt is titrated into the solution and

4

the end point is determined. From the amounts of calcium ions and polymer in the solution the amount of calcium sequestered by the polymer can be determined. The amount of calcium sequestered by each acid group for the various tested polymers is shown in the accompanying table.

The results show that AMPS copolymers are very good sequesterants for calcium and that polymers having a low polydispersity are particularly efficacious.

TABLE 1

| Amount of monomer %w/w | | MW | PD | Moles $Ca^{2+}$ sequestered per mole acid group |
|---|---|---|---|---|
| Na AMPS | Acrylic acid (Na salt) | | | |
| 17.5 | 82.5 | 3213 | 1.63 | 1.04 |
| 17.5 | 82.5 | 3419 | 1.61 | 1.06 |
| 17.5 | 82.5 | 2982 | 1.44 | 1.40 |
| 17.5 | 82.5 | 1163 | 1.30 | 1.77 |
| 17.5 | 82.5 | 3102 | 1.35 | 1.25 |
| 36.1 | 63.9 | 4306 | 1.45 | 1.64 |
| - | 100 | 3000 | 1.80 | 0.625 |

EXAMPLE 2

To compare the effect of PD on the polymers when used as detergent builders in conventional detergent compositions the calcium tolerance of the polymers was determined in a Hampshire Test using a calcium ion selective electrode. In this test the highest possible value is required. When the polymer was polyacrylic acid Mw about 3000 PD about 1.6 the value (in Moles $Ca^{2+}$ required per mole of polymer) was 0.625 but when the polymer was polyacrylic acid of similar molecular weight but PD 1.18 the value was 0.780.

EXAMPLE 3

To 100 ml of a 22g/1 solution of a mixture of commercially available detergents containing no soil suspending agent was added 5 ml of 2% solution of the anti redeposition agent to be tested. Half a piece of filter paper (11cm diameter) was soaked in used engine oil, drained and padded with a paper towel until almost dry (0.7 oil/0.4g paper) and placed in the detergent solution with a 20x10cm piece of 100% polyester jersey fabric. The container was sealed and tumbled for 20 minutes at a temperature of 70°C. The fabric was rinsed in cold water and dried. The reflectance at 5 places on the fabric was measured and averaged and the results compared with controls using conventional anti redeposition agents and without any agents. The results were as follows:

TABLE

| Anti-redeposition aid | Reflectance% |
|---|---|
| None | 45.6 |
| polysodium acrylate mw 3560 pd 1.8 | 71.8 |
| polysodium acrylate mw 1800 pd 1.35 | 75.2 |
| polysodium acrylate mw 4500 pd 1.4 | 76.1 |
| Na AMPS:Na acrylate copolymer 40:60 $^w$/w mw 3500 pd 1.45 | 74.3 |
| Na AMPS:Na acrylate copolymer 20:80 $^w$/w mw 3500 pd 1.5 | 76.1 |

This example shows that compositions according to the present invention containing low PD polymers as anti-redeposition aids are superior to compositions containing a high PD polymer of similar chemical type and of a similar molecular weight.

EXAMPLE 4

Drilling muds were formulated of 25 ppb bentonite, 220 ppb barites, 4 ppb gypsum, 2 ppb $Ca(OH)_2$ and the viscosity of the mud after addition of various amounts of polymers was determined. When the polymer was polyacrylic acid Mw about 3000 and PD about 1.6 the minimum viscosity was obtained at a dose of about 1.2 ppb. When the polyacrylic acid was fractionated into fractions each having PD in the range 1.1-1.4, both fractions gave a lower viscosity at a lower dosage, the higher molecular weight fraction giving a low viscosity over a wide range of dosages, while the lower molecular weight fraction gives the lowest viscosity.

EXAMPLE 5

This example illustrates the production of one of the preferred polymers, a copolymer of sodium allyl sulphonate and soium acrylate having PD 1.44.

240g of IPS was heated to reflux in a resin pot equipped with mechanical stirrer, 2 condensers and thermometer. At reflux 1g of AZDN as initiator was added to the IPS as a slurry in methanol at the same time two feeds were started, 1 feed containing 241.8g acrylic acid monomer at a concentration of 78.6% w/w, 48.8g sodium allyl sulphonate at a concentration of 45.7% and 74.4g water. This was added over 6 hours via a condenser. The other feed contained 3.78g AZDN dissolved in 66.3g water, the addition being made over 7 hours.

After the additions the reaction mass was cooled and 70% of the carboyxl groups were neutralised with sodium hydroxide at 46.6%. The reaction mass was allowed to fractionate and the lower aqueous layer was stripped of residual IPS and fully neutralised. The polymer was titrated for strength and analysed for molecular weight by G.P.C.

| MW | 3180 |
|---|---|
| Mn | 2212 |
| Polydispersity | 1.44 |

**Claims**

1. Use as a dispersant in a drilling or packer fluid of a water soluble polymer formed from one or more unsaturated monomers comprising carboxylic acid containing monomer, or a water soluble salt thereof, having Mw from 1,500 to 50,000 measured on the full sodium salt, characterised in that PD is below 1.5 and the monomers do not include an ethylenically unsaturated compound having a sulphonate group substituted on to an aliphatic carbon atom.

2. A use according to claim 1 in which Mw is below 20,000.

3. A use according to claim 2 in which the polymer is polyacrylic acid, or a water soluble salt, having Mw of 1,500 to 5,000 measured on the sodium salt, and an PD of 1.05 to 1.45.

4. Use as detergent builder and/or anti-redeposition aid in a detergent composition of a water soluble polymer formed from one or more unsaturated monomers including monomer containing acid groups selected from carboxylic, sulphuric and sulphonic acid groups, or a water soluble salt thereof and having Mw from 1,500 to 100,000, characterised in that the polymer has PD below 1.5.

5. A use according to claim 4 in which the polymer is selected from polyacrylic acid and copolymers of acrylic acid with 2-acrylamido-2-methyl propane sulphonic acid.

6. A use according to claim 4 or claim 5 wherein Mw is up to 50,000 and PD is below 1.4.

7. A use according to any of claims 4 to 6 in which Mw is up to 6,000.

EP 0 182 600 B1

**Revendications**

1. Utilisation comme dispersant dans un fluide de forage ou de remblayage d'un polymère soluble dans l'eau formé d'un ou plusieurs monomères insaturés comprenant un monomère contenant un acide carboxylique ou un de ses sels solubles dans l'eau ayant un poids moléculaire moyen en poids Mw de 1 500 à 50 000 mesuré sur le sel total de sodium, caractérisé en ce que l'indice de polydispersité PD est inférieur à 1,5 et en ce que les monomères ne contiennent pas un composé éthylénique ayant un groupe sulfonate substitué sur un atome de carbone aliphatique.

2. Une utilisation selon la revendication 1, dans laquelle Mw est inférieur à 20 000.

3. Une utilisation selon la revendication 2, dans laquelle le polymère est l'acide polyacrylique ou un de ses sels solubles dans l'eau ayant un Mw de 1 500 à 5 000 mesuré sur le sel de sodium et un indice PD de 1,05 à 1,45.

4. Utilisation comme auxiliaire de détergence et/ou auxiliaire antiredéposition dans une composition détergente d'un polymère soluble dans l'eau formé d'un ou plusieurs monomères insaturés contenant un monomère contenant des groupes acides choisis parmi les groupes acides carboxyliques, acides sulfuriques et acides sulfoniques, ou un de ses sels sobules dans l'eau et ayant un Mw de 1 500 à 100 000, caractérisée en ce que le polymère a un indice PD inférieur à 1,5.

5. Une utilisation selon la revendication 4, dans laquelle le polymère est choisi parmi l'acide polyacrylique et les copolymères d'acide acrylique avec l'acide 2-acrylamido-2-méthylpropanesulfonique.

6. Une utilisation selon la revendication 4 ou 5, dans laquelle Mw va jusqu'à 50 000 et l'indice PD est inférieur à 1,4.

7. Une utilisation selon l'une quelconque des revendications 4 à 6, dans laquelle Mw va jusqu'à 6 000.

**Patentansprüche**

1. Verwendung eines wasserlöslichen Polymers als Dispersionsmittel in einer Bohr- oder Packerflüssigkeit, welches aus einem oder mehreren ungesättigten Monomeren gebildet wird, die ein Carbonsäure-enthaltendes Monomer oder ein wasserlösliches Salz davon umfassen und einen Mw-Wert von 1.500 bis 50.000, gemessen am vollständigen Natriumsalz, aufweist, dadurch gekennzeichnet, daß der PD-Wert weniger als 1,5 beträgt und die Monomere keine ethylenisch ungesättigte Verbindung mit einer Sulfonatgruppe, als Substituent am aliphatischen Kohlenstoffatom, enthalten.

2. Verwendung nach Anspruch 1, worin der Mw-Wert weniger als 20.000 beträgt.

3. Verwendung nach Anspruch 2, worin das Polymer eine Polyacrylsäure oder ein wasserlösliches Salz mit einem Ww-Wert von 1.500 bis 5.000, gemessen am Natriumsalz, und mit einem PD-Wert von 1,05 bis 1,45, ist.

4. Verwendung als Waschmittelbuilder und/oder Anti-Abscheidungshilfsmittel in einer Waschmittelzusammensetzung eines wasserlöslichen Polymers, das aus einem oder mehreren ungesättigten Monomeren gebildet wird und ein Monomer enthält, das Säuregruppen, ausgewählt aus: Carboxyl-, Schwefel- und Sulfonsäuregruppen enthält, oder ein wasserlösliches Salz von diesen, und das einen Mw-Wert von 1.500 bis 100.000 hat, dadurch gekennzeichnet, daß das Polymer einen PD-Wert unter 1,5 aufweist.

5. Verwendung nach Anspruch 4, worin das Polymer ausgewählt wird aus Polyacrylsäure und dem Copolymer aus Acrylsäure mit 2-Arcylamido-2-methylpropansulfonsäure.

6. Verwendung nach Anspruch 4 oder 5, worin der Mw-Wert bis zu 50.000 und der PD-Wert weniger als 1,4 beträgt.

7. Verwendung nach einem der Ansprüche 4 bis 6, worin der Mw-Wert bis zu 6.000 beträgt.

7